# FASCICULE DE BREVET EUROPEEN

(11) **EP 0 480 782 B1**
(45) Date de publication et mention de la délivrance du brevet: **02.11.1994**
(21) Numéro de dépôt: 91402388.2
(22) Date de dépôt: 06.09.1991
(51) Int. Cl.: B60T 13/563

(54) **Servofrein à dépression de type tandem**
Tandemunterdruckbremskraftverstärker
Tandem arranged vacuum operated brake booster

(30) Priorité: 10.10.1990 FR 9012484
(43) Date de publication de la demande: 15.04.1992
(73) Titulaire: Bosch Systemes de Freinage, 93700 Drancy (FR)
(72) Inventeur: Gautier, Jean-Pierre, BENDIX EUROPE, F-93700 Drancy (FR); Perez, Miguel, BENDIX EUROPE, F-93700 Drancy (FR); Verbo, Ulysse, BENDIX EUROPE, F-93700 Drancy (FR)
(74) Mandataire: Bentz, Jean-Paul

(56) Documents cités:
- DE-A- 3 303 577
- US-A- 4 345 506

## Description

La présente invention concerne les servofreins à dépression de type tandem notamment utilisés pour assister le freinage des véhicules automobiles.

On connaît depuis longtemps de tels servofreins et les documents DE-A-3 505 626, FR-A-2 431 623, US-A-4 516 474, pour n'en citer que quelques uns, en décrivent différents modèles.

Ces servofreins tandem sont relativement de construction compliquée dont résulte des coûts importants de fabrication. Notamment, les deux pistons mobiles qui sont séparés par un plateau fixe doivent être tous deux solidarisés à un moyeu mobile.

La présente invention a pour but d'améliorer ce moyen de solidarisation des pistons au moyeu.

L'invention concerne donc un servomoteur à dépression du type tandem comportant deux compartiments séparés par un plateau fixe, chacun de ces compartiments étant divisé en une chambre avant et une chambre arrière au moyen d'un piston et d'une membrane isolante dont au moins le bord interne est pourvu d'un bourrelet, chacun des pistons étant solidaire d'un moyeu mobile contenant un moyen de valve, le piston du compartiment avant par l'intermédiaire d'un manchon cylindrique.

Selon l'invention, le moyeu comporte à sa périphérie une gorge dans laquelle pénètrent respectivement l'extrémité interne du piston du compartiment arrière et l'extrémité arrière du manchon cylindrique, le bourrelet du bord interne de la membrane du compartiment arrière assurant le verrouillage de l'ensemble.

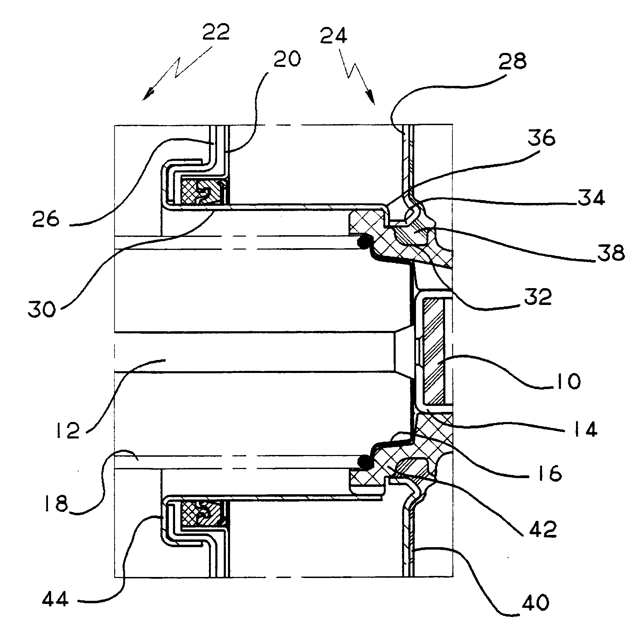

L'invention sera mieux comprise et d'autres buts, avantages et caractéristiques de celle-ci apparaîtront plus clairement à la lecture de la description qui suit d'un mode de réalisation donné à titre non limitatif et à laquelle est jointe une planche de dessin sur laquelle :
- La Figure unique représente schématiquement en coupe un moyen de solidarisation des pistons au moyeu d'un servomoteur selon l'invention.

En référence maintenant à cette Figure Unique, seule a été représentée la partie essentielle de l'invention, étant entendu que les servomoteurs à dépression de type tandem sont bien connus.

L'Homme du métier reconnaîtra le disque de réaction 10 sur lequel prend appui la tige de poussée 12 agissant, par exemple, sur le piston d'un maître-cylindre. La tige de poussée 12 et sa coupelle 14 sont maintenues contre le disque de réaction 10 au moyen d'une pièce élastique 16, et un ressort hélicoïdal 18 rappelle le moyeu 42 et les pistons au repos.

Un plateau fixe 20 sépare les servomoteur en un compartiment avant 22 et un compartiment arrière 24. Chacun de ces compartiments est divisé par un piston respectivement 26, 28.

Le piston avant 26 est solidaire d'un manchon cylindrique 30. Le piston avant 26 s'emboîte, par exemple, dans une gouttière 44 prévue à cet effet à l'extrémité avant du manchon 30.

Une gorge 32 est pratiquée à la périphérie du moyeu 42 pour recevoir l'extrémité interne 34 du piston du compartiment arrière, l'extrémité arrière 36 du manchon cylindrique 30 et un bourrelet 38 ménagé sur le bord interne de la membrane 40 du compartiment arrière 24.

L'extrémité arrière 36 du manchon cylindrique 30 présente un rabat radial au moins partiellement sur lequel prend appui l'extrémité interne 34 du piston 28 du compartiment arrière 24, cette extrémité 34 étant de préférence recourbée pour développer une force sensiblement axiale bloquant le manchon 30, au moyen du bourrelet 38. On comprendra aisément que l'assemblage d'un tel servomoteur devient facilité par l'absence de pièces supplémentaires de fixation, une simple opération d'emboîtement suffisant pour verrouiller les pièces les unes aux autres.

Bien évidemment, l'homme du métier pourra apporter de nombreuses modifications sans sortir du cadre de l'invention, tel que défini par les revendications jointes.

Notamment, il pourra prévoir plusieurs rabats 36 à l'extrémité du manchon cylindrique 30 judicieusement répartis autour de celui-ci. Il pourra également utiliser un autre type de joint d'isolation entre le plateau fixe 20 et le manchon 30 que celui représenté. Il pourra aussi disposer le ressort de rappel 18 d'une manière différente de celle représentée.

## Revendications

1. Servofrein à dépression du type tandem comportant deux compartiments (22, 24) séparés par un plateau fixe (20), chacun des dits compartiments étant divisé en une chambre avant et une chambre arrière au moyen d'un piston (26, 28) et d'une membrane isolante dont au moins le bord interne est pourvu d'un bourrelet (38), chacun des dits pistons (26, 28) étant solidaire d'un moyeu mobile (42) contenant un moyen de valve, le piston (26) du compartiment avant par l'intermédiaire d'un manchon cylindrique (30), caractérisé en ce que le dit moyeu (42) comporte à sa périphérie une gorge (32) dans laquelle pénètrent respectivement l'extrémité interne (34) du piston (28) du compartiment arrière (24) et l'extrémité arrière (36) du manchon cylindrique (30), le dit bourrelet (38) du bord interne de la membrane (40) du compartiment arrière (24) assurant le verrouillage de l'ensemble.

2. Servofrein selon la revendication 1 caractérisé en ce que l'extrémité arrière (36) du manchon cylindrique (30) présente au moins partiellement un rabat pénétrant dans la dite gorge (32) sur lequel prend appui l'extrémité interne (34) du piston (28) du compartiment arrière (24).

3. Servofrein selon la revendication 2 caractérisé en ce que le dit rabat (36) est sensiblement radial et que l'extrémité interne (34) du piston (28) du compartiment arrière (24) est recourbée de manière à développer une force sensiblement axiale bloquant le dit manchon cylindrique (30) au moyen du dit bourrelet (38).

## Claims

1. Vacuum brake-booster of the tandem type, comprising two compartments (22, 24) separated by a stationary plate (20), each of said compartments being divided into a front chamber and a rear chamber by means of a piston (26, 28) and of an isolating diaphragm, at least the inner edge of which is equipped with a bead (38), each of said pistons (26, 28) being fixed to a movable hub (42) containing a valve means, the piston (26) of the front compartment being so fixed by way of a cylindrical sleeve (30), characterized in that said hub (42) possesses, on its periphery, a groove (32) into which penetrate respectively the inner end (34) of the piston (28) of the rear compartment (24) and the rear end (36) of the cylindrical sleeve (30), said bead (38) of the inner edge of the diaphragm (40) of the rear compartment (24) ensuring the locking of the assembly as a whole.

2. Brake-booster according to Claim 1, characterized in that the rear end (36) of the cylindrical sleeve (30) has at least partially a turned-down portion which penetrates into said groove (32) and on which bears the inner end (34) of the piston (28) of the rear compartment (24).

3. Brake-booster according to Claim 1, characterized in that said turned-down portion (36) is substantially radial and in that the inner end (34) of the piston (28) of the rear compartment (24) is curved so as to generate a substantially axial force blocking said cylindrical sleeve (30) by means of said bead (38).

## Patentansprüche

1. Tandem-Unterdruckservobremse mit zwei Räumen (22, 24), die durch eine feststehende Platte (20) getrennt sind, wobei jeder der Räume in eine vordere Kammer und in eine hintere Kammer durch einen Kolben (26 bzw. 28) und eine Isolationsmembran unterteilt sind, von der wenigstens der innere Rand mit einem Wulst (38) versehen ist, wobei jeder der Kolben (26, 28) mit einer ein Ventilmittel enthaltenden beweglichen Nabe (42) verbunden ist, der Kolben (26) des vorderen Raumes über eine zylindrische Muffe (30), dadurch gebenzeichnet, daß die Nabe (42) auf ihrem Umfang eine Nut (32) enthält, in die das innere Ende (34) des Kolbens (28) des hinteren Raumes (24) bzw. das hintere Ende (36) der zylindrischen Muffe (30) eindringt, wobei der Wulst (38) des inneren Randes der Membran (40) des hinteren Raumes (24) den Zusammenhalt der Baugruppe gewährleistet.

2. Servobremse nach Anspruch 1, dadurch gekennzeichnet, daß das hintere Ende (36) der zylindrischen Muffe (30) wenigstens teilweise eine Umbiegung enthält, die in die Nut (32) eindringt und an der sich das innere Ende (34) des Kolbens (28) des hinteren Raumes (24) abstützt.

3. Servobremse nach Anspruch 2, dadurch gekennzeichnet, daß die Umbiegung (36) im wesentlichen radial ist und daß das innere Ende (34) des Kolbens (28) des hinteren Raumes (24) so gebogen ist, daß eine im wesentlichen axiale Kraft erzeugt wird, die die zylindrische Muffe (30) mittels des Wulstes (38) blockiert.
